# DEMANDE DE BREVET EUROPEEN

(11) **EP 1 791 311 A1**
(43) Date de publication de la demande: **30.05.2007**
(21) Numéro de dépôt: 06354039.7
(22) Date de dépôt: 20.11.2006
(51) Int. Cl.: H04L 27/156, H04L 27/16

(54) **Démodulateur FSK à bande étroite et procédé de démodulation**

(30) Priorité: 23.11.2005 FR 0511896
(71) Demandeur: ADEUNIS RF, 38920 Crolles (FR)
(72) Inventeur: Champaney, Pascal, 38660 Le Touvet (FR); Chatroux, Thierry, 38920 Crolles (FR)
(74) Mandataire: Hecké, Gérard

(57) **Abrégé**

Un dispositif de démodulation pour un récepteur radioélectrique à modulation de fréquence FSK à bande passante sélective comporte :
- un mélangeur (11) analogique piloté par un oscillateur (12) de référence pour transposer la radiofréquence (RF) du signal (ARF) reçu à modulation FSK vers une fréquence intermédiaire (Fl) moins élevée,
- un démodulateur numérique (10) programmé pour extraire du signal (S2) modulé FSK à fréquence intermédiaire (Fl), deux fréquences basses F0 et F1 alternant au gré des états logiques bas (0) ou haut (1), le traitement de démodulation numérique consistant à discriminer lesdites fréquences F0 et F1 pour reconstituer le flux binaire du signal numérique (S3) démodulé à la sortie du démodulateur (10), lequel est programmé au moyen d'un microcontrôleur ou d'un processeur (DSP) piloté par un algorithme de démodulation pour déterminer lesdites fréquences basses F0 et F1 en tolérant un décalage prédéterminé de la fréquence intermédiaire (FI).

## Description

**Domaine technique de l'invention** L'invention concerne un dispositif et un procédé de démodulation pour un récepteur radioélectrique à modulation de fréquence FSK.

Le signal modulé FSK engendré dans un modulateur par un signal numérique modulant est transformé dans le démodulateur en un signal numérique démodulé.

Le marché des équipements radio libres de droit (non soumis à redevance) est limité par la réglementation à des puissances d'émission très faibles. Les quelques dizaines de mW autorisés imposent des récepteurs à modulation de fréquence FSK de très grande sensibilité si les portées souhaitées sont importantes ou si l'environnement de propagation est encombré.

D'un point de vue physique, une grande sensibilité de réception n'est possible qu'au moyen d'un récepteur très sélectif, afin de réduire le plancher de bruit électrique de réception nuisible au démodulateur FSK.

La contrepartie de cette faible bande passante est la nécessité d'avoir des références de fréquences de très grande précision, notamment pour le pilote d'émission et l'oscillateur local de réception. Ce critère implique donc un coût important de cette fonction quand celle-ci reste dans les limites technologiques des composants.

### État de la technique

Il est bien connu d'utiliser une démodulation FSK à bande étroite analogique. Compte tenu de la forte sensibilité souhaitée, le récepteur à modulation de fréquence possède une bande passante très étroite. La modulation à traiter est donc un signal modulé FSK à bande étroite, c'est à dire présentant une très faible excursion de fréquence, notamment de quelques kHz.

Un démodulateur analogique connu du type en quadrature utilise à titre d'exemple un multiplieur pour effectuer le produit du signal intermédiiare FI modulé avec son homologue déphasé de 90°. Cette opération fait apparaître une composante basse fréquence représentant la modulation. Celle-ci est sélectionnée au moyen d'un simple filtre passe bas connecté à la sortie du démodulateur.

Il existe d'autres solutions analogiques faisant usage d'une boucle à verrouillage de phase, comprenant un comparateur recevant le signal modulé et un signal issu d'un oscillateur contrôlé en tension, et relié électriquement à la sortie du filtre passe-bas.

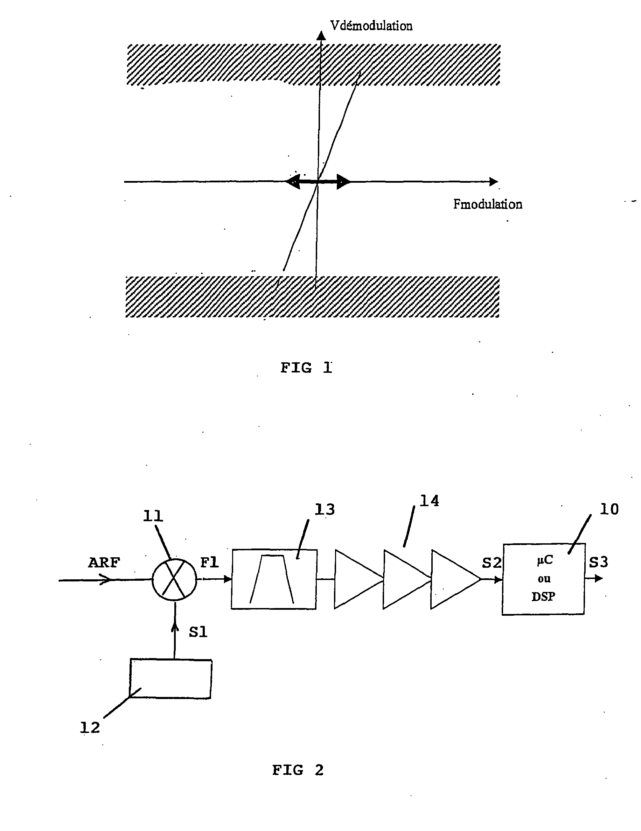

Pour démoduler le signal modulé FSK à faible excursion, le démodulateur analogique nécessite une forte pente de démodulation. La figure 1 représente la caractéristique de la tension de démodulation en fonction de la fréquence de modulation, avec obtention d'une tension démodulée conséquente à partir d'une excursion de fréquence faible. Compte tenu des limites dues à la tension d'alimentation, il n'aura donc que peu de dynamique de démodulation pour tolérer d'éventuels décalages en fréquence du récepteur par rapport à l'émetteur.

Les problèmes rencontrés dans ce type de démodulateurs analogiques sont les erreurs en fréquence :
Tous les émetteurs et récepteurs utilisent des références de fréquence à quartz. Il s'agit d'une lamelle piézoélectrique dont la fréquence de résonance est fonction des dimensions. C'est, à ce jour, le composant électronique présentant la meilleure stabilité en fréquence à long terme.

L'erreur en fréquence de ce composant peut être décomposée en trois paramètres majeurs:
- Le calage : Il s'agit de l'erreur en fréquence due à la dispersion sur la production des quartz (erreur de taille) mesurée à 25°C.
- La dérive en température : Il s'agit d'une erreur en fréquence due à la variation de température d'utilisation engendrant la dilatation du cristal piézoélectrique, dès que la température diffère de 25°C.
- Le vieillissement : Il s'agit de la dérive de la fréquence de résonance due à l'évolution électrique du composant dans le temps.

Si les deux premiers paramètres relatifs au calage et à la dérive en température peuvent être maîtrisés techniquement, le vieillissement est une dérive incontournable qui va limiter la capacité du produit à fonctionner pendant plusieurs dizaines d'années.

Les solutions rencontrées classiquement pour pallier ce problème sont les suivantes:
- Utiliser des références de fréquences de très haute qualité, par exemple des oscillateurs à quartz TCXO contrôlés en température. Il s'agit néanmoins de composants très chers, et consommateurs d'énergie.
- Imposer une maintenance annuelle afin de recaler les références de fréquence, ce qui impose une logistique lourde si le parc est conséquent.
- Utiliser des émetteurs de références sur lesquels les récepteurs vont se caler automatiquement. Cette solution nécessite un circuit électronique compliqué et une opération de calage lente.

Le document WO 96/10309 se rapporte à un récepteur FSK à fréquence intermédiaire zéro ayant un démodulateur en tranches de symboles réglable. Le principe utilisé repose sur la production par un bloc démodulateur spécial d'impulsions proportionnelles à la différence entre la fréquence instantanée et celle de l'oscillateur local. Un tel récepteur est compliqué et onéreux à réaliser, car il ne peut pas démoduler directement le signal de fréquence intermédiaire via un microcontrôleur.

### Objet de l'invention

L'invention a pour but de pallier à ces inconvénients, et de réaliser un démodulateur FSK stable dans le temps en étant insensible aux dérives en fréquence dues au vieillissement, d'un coût réduit, et peu consommateur d'énergie.

Le démodulateur FSK selon l'invention est caractérisé en ce qu'il comporte :
- un mélangeur analogique piloté par un oscillateur de référence pour transposer la radiofréquence du signal reçu à modulation FSK vers une fréquence intermédiaire moins élevée,
- un démodulateur numérique programmé pour extraire du signal modulé FSK à fréquence intermédiaire, deux fréquences basses F0 et F1 alternant au gré des états logiques bas (0) ou haut (1), le traitement de démodulation numérique consistant à discriminer lesdites fréquences F0 et F1 pour reconstituer le flux binaire du signal numérique démodulé à la sortie du démodulateur, lequel est programmé au moyen d'un microcontrôleur ou d'un processeur piloté par un algorithme de démodulation pour déterminer lesdites fréquences basses F0 et F1 en tolérant un décalage prédéterminé de la fréquence intermédiaire.

La fréquence transposée modulée FSK en sortie du mélangeur correspond à la fréquence intermédiaire FI de l'ordre de 10kHz. Le récepteur selon l'invention fonctionne à cette faible fréquence intermédiaire, et traite directement la différence de fréquence entre le signal reçu et l'oscillateur local. L'analyse en temps réel de cette différence de fréquence est effectuée par le microcontrôleur, et permet de reconstituer les données transmises.

Selon un mode de réalisation préférentiel, la sortie du mélangeur est avantageusement suivie d'un circuit de filtrage à bande moyenne et d'un circuit amplificateur limiteur, lequel délivre un signal numérique FSK au microcontrôleur du démodulateur digital. Il en résulte une grande dynamique de démodulation en fréquence, indépendamment de la tension d'alimentation.. Un tel démodulateur FSK est stable dans le temps, car il est insensible aux dérives en fréquence dues au vieillissement, peu consommateur d'énergie, et bon marché car en nécessitant pas de circuit électronique compliqué.

Le microcontrôleur tolère un décalage de la fréquence intermédiaire FI au-delà de la variation de fréquence correspondant à la limite d'un démodulateur analogique.

L'invention concerne également un procédé de démodulation numérique d'un signal radiofréquence à modulation de fréquence FSK dans un récepteur radioélectrique à bande passante sélective, consistant à :
- transposer la radiofréquence du signal reçu modulé FSK vers une fréquence intermédiaire FI moins élevée,
- extraire du signal modulé FSK à fréquence intermédiaire FI, deux fréquences basses F0 et F1 alternant au gré des états logiques bas (0) ou haut (1),
- et discriminer les deux fréquences basses F0 et F1 pour reconstituer le flux binaire du signal de sortie numérique démodulé .

On peut ainsi réaliser des récepteurs FSK bande étroite, avec des quartz présentant des dérives au vieillissement de plus ou moins 5ppm par an, et pouvant fonctionner plus de 10 ans.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente la caractéristique connue de la tension de démodulation en fonction de la fréquence de modulation, avec obtention d'une tension démodulée conséquente à partir d'une excursion de fréquence faible.
La figure 2 montre le schéma synoptique du démodulateur FSK numérique selon l'invention.
La figure 3 illustre la dynamique de démodulation en cas de décalage de la fréquence du signal ARF dans le temps, soit pour des cas d'erreur négative, soit pour des cas d'erreur positive par rapport au cas nominal.
La figure 4 représente les diagrammes représentatifs en traits forts la forme du signal original dans du préambule, et en traits fins la forme théorique du signal d'entrée.

### Description d'un mode particulier de réalisation

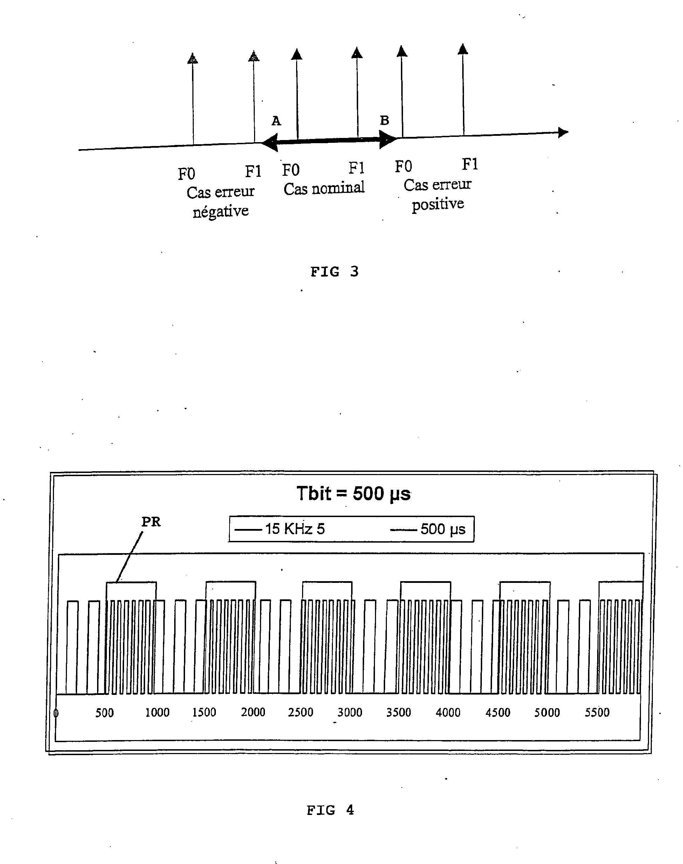

Sur la figure 2, le démodulateur FSK analogique est remplacé par un démodulateur digital micro-programmé au moyen d'un microcontrôleur 10 ou d'un processeur DSP.

Etant donné que la réception à bande étroite impose une excursion de fréquence faible, de quelques kHz, par exemple plus ou moins 4kHz, et un débit binaire également faible de quelques kbps, par exemple 2 kbps, il est possible de transposer la radiofréquence RF du signal ARF reçu modulé FSK vers une fréquence Intermédiaire FI suffisamment faible pour être directement traitée par le microcontrôleur 10.

La transposition de fréquence est opérée au moyen d'un mélangeur 11 analogique comprenant à titre d'exemple, soit un transistor non linéaire, soit une cellule de Gilbert ou un mélangeur en anneau. Un oscillateur 12 local de référence pilote le mélangeur 11 au moyen d'un signal S1 à porteuse HF pure, dont la fréquence correspond à la fréquence RF du signal ARF moins 10KHz.

La valeur de la radiofréquence RF du signal ARF numérique modulé FSK est relativement élevée ( à titre d'exemple 433,8 MHz), alors que celle du signal S1 de l'oscillateur 12 local de transposition est de 433,79 ou 433,81 MHz. La fréquence transposée modulée FSK en sortie du mélangeur 11 correspond à la fréquence intermédiaire FI de l'ordre de 10kHz.

La sortie du mélangeur 11 est suivie d'un circuit de filtrage 13 FI à bande moyenne et d'un circuit amplificateur 14 limiteur, lequel délivre un signal numérique S2 au microcontrôleur 10 du démodulateur digital.

L'extraction des bits du signal S2 modulé FSK à fréquence intermédiaire FI est ensuite effectuée par le biais d'un micro-logiciel de traitement du signal. Dans ce système, la fréquence intermédiaire FI relativement basse du signal S2 (10kHz à titre d'exemple), est alors vue comme deux fréquences basses F0 et F1 qui alternent au gré des états logiques bas 0 ou haut 1 reçus.

Le traitement de démodulation numérique consiste donc à discriminer ces deux fréquences F0 et F1 pour reconstituer le flux binaire du signal numérique démodulé S3 à la sortie du microcontrôleur 10.

Il en résulte une dynamique de démodulation en fréquence beaucoup plus grande, indépendamment de la tension d'alimentation. La figure 3 montre un exemple de cette dynamique de démodulation en cas de décalage de la fréquence du signal ARF dans le temps, soit pour des cas d'erreur négative, soit pour des cas d'erreur positive par rapport au cas nominal.

Le microcontrôleur 10 tolère ainsi un décalage de la fréquence intermédiaire FI au-delà de la variation de fréquence AB correspondant à la limite d'un démodulateur analogique.

Le traitement consiste à discriminer deux fréquences F0 et F1, quelles que soient les valeurs absolues de ces deux fréquences. La seule limite est la capacité du microcontrôleur 10 ou du processeur DSP à mesurer l'une d'elles, devenue trop élevée.

Cette dynamique de traitement est directement liée à la puissance de calcul du microcontrôleur 10 ou du DSP. Elle permet d'accepter des erreurs en fréquences importantes, pourvu qu'elles restent dans la capacité de traitement. La liaison radioélectrique peut alors se satisfaire de composants bon marché, ayant des références de fréquences très classiques.

L'introduction d'un algorithme de traitement du signal permet d'effectuer la démodulation FSK d'un signal présentant un rapport signal sur bruit plus important que le démodulateur FSK analogique classique. De fait, il est possible d'augmenter la bande passante du récepteur (pour tolérer plus de dérives en fréquence) sans altérer la sensibilité. Le procédé de démodulation permet de s'adapter aux caractéristiques en vieillissement des quartz utilisés.

En cas de dérives de vieillissement du quartz trop importantes, l'algorithme de démodulation peut contenir des moyens de correction automatique de fréquence décalant l'oscillateur local 12 de référence pour retrouver une fréquence intermédiaire FI de l'ordre de 10kHz.

### Principe de l'algorithme de démodulation

Chaque bit transmis par la radio (signal original) est modulé avec une fréquence F1 pour un état logique haut 1 et une fréquence F0 pour un état logique bas 0.

Les diagrammes de la figure 4 représentent (pour un couple de fréquences) en traits forts la forme du signal original dans du préambule, et en traits fins la forme théorique du signal d'entrée.

A titre d'exemple, la fréquence F0 est égale à 5kHz, et la fréquence F1 est égale à 15kHz.

### Phase 1)

Recherche de préambule : Recherche sur l'entrée radio (potentiellement dans « du bruit ») de préambule , c'est à dire une alternance de 1010101 selon la caractéristique PR de la figure 4.

### Phase 2)

Détermination du rapport F0 / F1 : Dans le préambule, évaluation des fréquences F0 et F1 afin de déterminer le nombre de fronts présents dans un état logique bas 0 et dans un état logique haut 1. Cette évaluation permet le calcul d'un nombre de fronts moyens (NBFM).

Le front montant est la transition de l'état logique bas 0 vers l'état logique haut 1, tandis que le front descendant est la transition de l'état logique haut 1 vers l'état logique bas 0. Le nombre de fronts moyens NBFM correspond à la valeur moyenne entre le nombre de fronts contenus dans un état logique bas 0 de fréquence F0, et celui dans un état logique haut 1 de fréquence F1. On prend ainsi en compte à la fois les fronts montants et descendants.

### Phase 3)

Démodulation entrée radio : Comptage des fronts présents sur l'entrée radio sur une fenêtre glissante d'une durée d'un temps bit. La figure 4 correspond à un temps bit de 500 microsecondes.

A chaque réévaluation du nombre de fronts dans la fenêtre glissante, la sortie S3 de démodulation du microcontrôleur 10 est mise à jour, à savoir :
Passage à l'état logique haut 1 si le nombre fronts est supérieur au nombre de fronts moyens NBFM.
Passage à 0 si le nombre fronts est inférieur au nombre de fronts moyens NBFM.

Pour éviter des éventuelles oscillations à la sortie S3 de démodulation, un filtrage temporel peut être réalisé lors de la commutation de la sortie de démodulation.

Un hystérésis en amplitude peut être appliqué en variante par rapport aux nombres de fronts moyens.

La période d'échantillonnage est choisie de façon à introduire un filtre naturel sur les fréquences trop hautes.

## Revendications

1. Dispositif de démodulation pour un récepteur radioélectrique à modulation de fréquence FSK à bande passante sélective, **caractérisé en ce qu'**il comporte :
- un mélangeur (11) analogique piloté par un oscillateur (12) de référence pour transposer la radiofréquence (RF) du signal (ARF) reçu à modulation FSK vers une fréquence intermédiaire (Fl) moins élevée,
- un démodulateur numérique (10) programmé pour extraire du signal (S2) modulé FSK à fréquence intermédiaire (FI), deux fréquences basses F0 et F1 alternant au gré des états logiques bas (0) ou haut (1), le traitement de démodulation numérique consistant à discriminer lesdites fréquences F0 et F1 pour reconstituer le flux binaire du signal numérique (S3) démodulé à la sortie du démodulateur (10),
- un microcontrôleur ou un processeur (DSP) piloté par un algorithme de démodulation pour déterminer lesdites fréquences basses F0 et F1 en tolérant un décalage prédéterminé de la fréquence intermédiaire (Fl).

2. Dispositif de démodulation selon la revendication 1, **caractérisé en ce que** le mélangeur (11) analogique est relié au microcontrôleur par l'intermédiaire d'un circuit de filtrage (13) à bande moyenne, et d'un circuit amplificateur (14) limiteur.

3. Dispositif de démodulation selon la revendication 2, **caractérisé en ce que** le mélangeur (11) analogique est formé par une cellule de Gilbert.

4. Dispositif de démodulation selon la revendication 2, **caractérisé en ce que** le mélangeur (11) analogique comporte un transistor non linéaire.

5. Dispositif de démodulation selon la revendication 2, **caractérisé en ce que** le mélangeur (11) analogique comporte un mélangeur en anneau.

6. Dispositif de démodulation selon la revendication 1, **caractérisé en ce que** l'oscillateur (12) délivre au mélangeur (11) analogique un signal (S1) de transposition à porteuse HF pure, dont la fréquence correspond à la fréquence RF du signal radio ARF reçu, moins une valeur représentative de la fréquence intermédiaire (FI).

7. Procédé de démodulation numérique d'un signal radiofréquence (ARF) à modulation de fréquence FSK dans un récepteur radioélectrique à bande passante sélective, consistant à :
- transposer la radiofréquence (RF) du signal reçu modulé FSK vers une fréquence intermédiaire (Fl) moins élevée,
- extraire du signal (S2) modulé FSK à fréquence intermédiaire (Fl), deux fréquences basses F0 et F1 alternant au gré des états logiques bas (0) ou haut (1),
- et discriminer les deux fréquences basses F0 et F1 pour reconstituer le flux binaire du signal de sortie numérique (S3) démodulé.

8. Procédé de démodulation selon la revendication 7, **caractérisé en ce que** le traitement de démodulation s'effectue quelles que soient les valeurs absolues des deux fréquences F0 et F1 basses extraites, et consiste à :
- effectuer sur l'entrée radio du récepteur une recherche de préambule correspondant à une alternance de bits,
- déterminer dans le préambule le rapport F0/F1 des deux fréquences basses F0 et F1 pour déterminer le nombre de fronts présents dans un état logique bas (0) et dans un état logique haut (1),
- calculer le nombre de fronts moyens (NBFM),
- compter sur l'entrée radio les fronts présents dans une fenêtre glissante pendant un temps bit d'une durée prédéterminée,
- et reconstituer le flux binaire du signal (S3) de sortie démodulé à chaque réévaluation du nombre de fronts dans ladite fenêtre glissante, le passage à l'état logique haut (1) s'effectuant si le nombre de fronts est supérieur au nombre de fronts moyens (NBFM), et le passage à l'état logique bas (0) s'effectuant lorsque le nombre de fronts est inférieur au nombre de fronts moyens (NBFM).
